# EUROPÄISCHE PATENTSCHRIFT

(11) **EP 0 777 349 B1**
(45) Veröffentlichungstag und Bekanntmachung des Hinweises auf die Patenterteilung: **25.01.2006**
(21) Anmeldenummer: 96118942.0
(22) Anmeldetag: 27.11.1996
(51) Int. Cl.: H04H 1/00, H04N 7/52, H04N 7/10, H04H 1/02

(54) **Kopfstellenanlage für den Empfang digitaler Rundfunksignale**
Head end station for the reception of digital broadcast signals
Station de tête pour la réception de signaux de radiodiffusion numériques

(30) Priorität: 01.12.1995 DE 19544872
(43) Veröffentlichungstag der Anmeldung: 04.06.1997
(73) Patentinhaber: Grundig Multimedia B.V., 1083HJ Amsterdam (NL)
(72) Erfinder: Ruelberg, Klaus-Dieter, Kurgartenstrass e 37, 90762 Furth (DE)
(74) Vertreter: Pröll, Jürgen

(56) Entgegenhaltungen:
- WO-A-93/10632
- DE-A- 4 012 657
- DE-C- 4 235 916
- US-A- 5 073 930
- "DIGITALE SAT-PROGRAMME IN VERTEILANLAGEN" FUNKSCHAU, Bd. 47, Nr. 4, 1. April 1996 (1996-04-01), Seiten 42-45, XP000591389 ISSN: 0947-5117

## Beschreibung

Die Erfindung betrifft eine Kopfstellenanlage für den Empfang digitaler" Rundfunksignale mit den im Oberbegriff des Anspruchs 1 angegebenen Merkmalen.

Derzeit erfolgt in der Fernseh- und Radiotechnik der Übergang von analogen zu digitalen Übertragungssystemen. In diesem Zusammenhang wird auch die Satelliten- und Kabelübertragung umgestellt. In der Fernsehtechnik ermöglicht beispielsweise ein Quellencodierverfahren nach dem MPEG-Standard eine Datenkompression, die eine besonders effiziente Übertragung zuläßt. Während in der analogen Technik auf einem Satellitentransponder von beispielsweise 33 MHz Bandbreite bisher ein Fernsehprogramm übertragen wird, ist mit der digitalen Technik eine Verteilung von 5 - 10 Programmen gleicher Qualität auf dem gleichen Transponder möglich.

Diese Vielfalt von Programmen erfordert einen Multiplex mit geeigneter Verwaltung der Daten. Auch dieser Aspekt ist im MPEG-Standard geregelt. Dazu ist vorgesehen, die Datenströme in Blöcke aufzuteilen, die im Zeitmultiplex übertragen werden. Ein Programm besteht aus mehreren Datenströmen unterschiedlicher Art (Videoinformation, Audioinformation, Hilfsinformation), den sogenannten elementaren Datenströmen. Die elementaren Datenströme eines Programms werden in einem Programmultiplexer zu einem Programmdatenstrom zusammengefügt. Verschiedene Programmdatenströme werden in einem Transportmultiplexer zum Transportdatenstrom zusammengesetzt. Die einzelnen Datenblöcke, die beispielsweise eine Länge von 188 Bytes haben können, werden jeweils mit Synchronisations- und Identifikationsbits versehen, um dem Empfänger die Auswahl der richtigen Blöcke zur Decodierung und Darstellung der Information auf einem Fernsehempfänger zu ermöglichen.

Eine genauere Beschreibung der Übertragung digitaler Rundfunksignale mittels Satellit oder Kabel ist beispielsweise dem Tagungsband zur 16. Jahrestagung der FKTG, 16. - 20.05.1994, zu entnehmen. Der im Tagungsband enthaltene Vortrag 2 von M. Comminetti, "The European System for Satellite Transmission of Multiprogramme Digital Television", beschreibt die Übertragung mittels Satellit, die Übertragung mittels Kabel wird im Vortrag 3 von L. Stenger, "Das europäische Systemkonzept für die Übertragung digitalisierter Fernsehsignale im Kabel", beschrieben.

Außerdem ist es bekannt, von einem Satelliten ausgestrahlte digitale Rundfunksignale so umzuformen, daß sie mittels Kabel zu den einzelnen Empfangsorten übertragen werden.

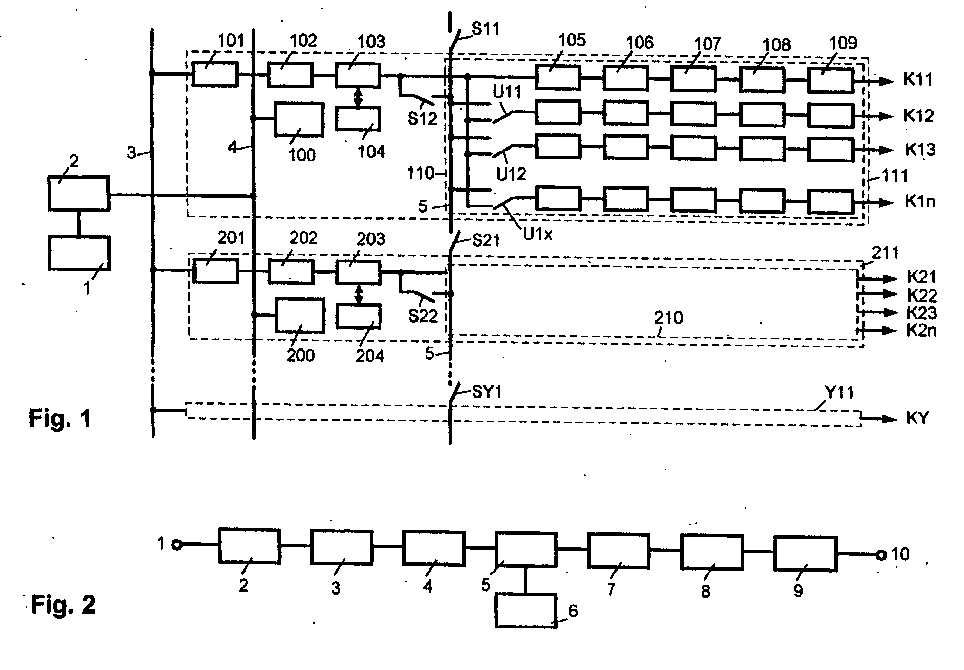

In Figur 2 ist eine Anlage zur Umformung digitaler Rundfunksignale eines Satelliten für die Übertragung mittels Kabel dargestellt. Das von einer Satellitenantenne kommende Signal 1 wird einem Satellitentuner 2 zugeführt, mit dem das Signal eines bestimmten Transponders ausgewählt wird. Mittels eines digitalen Demodulators 3 (OPSK-Demodulator) wird das Signal demoduliert. Anschließend wird mittels eines Decoders 4 eine Fehlerkorrektur durchgeführt, der Transportdatenstrom liegt nun wieder vor. Ein Steuerrechner 6 und eine Tabellenverarbeitung 5 dienen dazu, die im Transportdatenstrom enthaltenen Synchronisations- und Identifikationsdaten so umzuformen, daß sie den Anforderungen des Kabels entsprechen, über das die digitalen Rundfunksignale übertragen werden sollen. Der Transportdatenstrom wird von einem Encoder 7 mit einem Fehlerschutz versehen, von einem Modulator 4 auf eine Trägerfrequenz aufmoduliert und mittels eines UHF-Umsetzers 9 auf einen gewünschten Kanal zur Übertragung im Kabel 10 umgesetzt.

Sowohl bei der Übertragung der digitalen Rundfunksignale mittels Satellit als auch bei der Übertragung im Kabel ist es nötig, daß am jeweiligen Empfangsort zusätzlich zu den üblicherweise vorhandenen Rundfunkgeräten Empfangsgeräte, sogenannte "set-top-boxen", vorhanden sind, um die Wiedergabe der digitalen Rundfunksignale zu ermöglichen. Diese Empfangsgeräte bedeuten für den Benutzer zusätzliche, nicht unerhebliche Kosten sowie einen zusätzlichen Installationsaufwand.

Aus den Aufsätzen "Digitaler Sat-Empfang: mehr Fragen als Antworten" und "Digital via Satellit", beide erschienen in Funkschau. 1995. Heft 9. Seiten 52-55 und Heft 21, Seiten 58-61, sind Kopfstellenaniagen für den Empfang digitaler Rundfunksignale bekannt. Bei den aus dem Stand der Technik bekannten Kopfstetlenanlagen wird allerdings nicht näher über die für die Umsetzung digitaler Signale nötigen Programmumsetzer eingegangen.

Ausgehend von diesem Stand der Technik liegt der Erfindung die Aufgabe zugrunde, eine Kopfstellenanlage für den Empfang digitaler Rundfunksignale anzugeben, die den Empfang und die Wiedergabe der digitalen Rundfunksignale am jeweiligen Empfangsort ohne zusätzliche Empfangsgeräte ermöglicht, wobei die Kopfstellenanlage hinsichtlich des Aufwands für die nötigen Programmumsetzer besonders vorteilhaft aufgebaut sein soll.

Diese Aufgabe wird bei einer Kopfstellenanlage für den Empfang digitaler Rundfunksignale mit den im Oberbegriff des Anspruchs 1 angegebenen Merkmalen durch die im kennzeichnenden Teil des Anspruchs 1 angegebenen Merkmale gelöst. Vorteilhafte Weiterbildungen ergeben sich aus den abhängigen Ansprüchen und der nachfolgenden Beschreibung.

Die Vorteile der Erfindung bestehen Insbesondere darin, daß mit einer erfindungsgemäßen Kopfstellenantage digitale Rundfunksignale am jeweiligen Empfangsort ohne zusätzliche Empfangseinrichtungen empfangen und wiedergegeben werden können wobei der Realisierungsaufwand für die Kopfstellenanlage dadurch gering gehalten werden kann daß jeweils nicht genutzte Programmumsetzer für einzelne Programme der Umsetzereinheiten für Transponder- bzw. Transportdatenstrome für die Umsetzung von Programmen anderer Transponder bzw. Transportdatenströme genutzt werden.

Im folgenden wird ein Ausführungsbeispiel für die Erfindung anhand einer Figur näher erläutert.

Es zeigt:
Figur 1 ein Prinzipschaltbild einer erfindungsgemäßen Kopfstellenanlage, und
Figur 2 ein Prinzipschaltbild einer bekannten Anlage zur Umformung digitaler. Rundfunksignale eines Satelliten für die Übertragung digitaler Rundfunksignale mittels Kabel.

Figur 1 stellt ein Prinzipschaltbild einer erfindungsgemäßen Kopfstellenanlage dar. Die Kopfstellenanlage besteht aus einer Bedieneinheit 1, einem zentralen Steuerrechner 2, einer Zuleitung 3 für ein digitales Rundfunksignal eines Satelliten oder einer Kabelverteilanlage, einem Steuerbus 4. einem Transportstrombus 5 mit Umschaltern S11 bis SY1 und mehreren Umsetzereinheiten 111 bis Y11 zur Umsetzung der digitalen Rundfunksignale in analoge Rundfunksignale.

Die Umsetzereinheiten 111 bis Y11 haben den gleichen Aufbau. Die Umsetzereinheit 111 besteht aus einem Steuerrecnner 100. einem Tuner 101. für digitale Rundfunksignale eines Satelliten- oder einer Kabelverteilanlage, einer Einrichtung 102 zur Demodulation und Fehlerkorrektur und einer sogenannten "conditional access"-Einheit 103, 104, mit der verschlüsselte Programme entschlüsselt werden können. Am Ausgang der Einheit 103 steht der Transportdatenstrom zur weiteren Verarbeitung zur Verfügung. Zur Erzeugung der einzelnen analogen Rundfunksignale K11 bis K1n der im Transportdatenstrom enthaltenen Programme stehen Programmumsetzer zur Verfügung. Die Programmumsetzer werden jeweils von einem Demultiplexer 105, der den jeweiligen Programmdatenstrom vom Transportdatenstrom abtrennt, einem Decoder 106, der beispielsweise ein MPEG2-Decoder sein kann. einem Digital/Analog-Wandler 107 zur Erzeugung eines analogen Fernsehsignals. einem Encoder 108 für analoge Fernsehsignale beispielsweise einem PAL-Encoder und einem Modulator 109 zur Umsetzung des PAL-Signals in einen gewünschten Übertragungskanal K11 gebildet.

Sämtliche Bestandteile der Kopfetellenanlage werden vom zentralen Steuerrechner 2 überwacht und gesteuert, die Steuerrechner 100 bis Y11 in den Umsetzereinheiten 111 bis Y11 wirken über den Steuerbus 4 mit dem zentralen Steuerrechner 2 zusammen und steuern die Bestandteile der einzelnen Umsetzereinheiten 111 bis Y11. Mittels der Bedieneinheit 1 kann beispielsweise eine gewünschte Verteilung der empfangenen Programme auf zur Verfügung stehende Kanäle erfolgen.

Von den Steuerrechnern 100 bis Y00 wird beispielsweise durch Auswertung der von dem jeweils fest mit dem Transportdatenstrom verbundenen Decoder 106 ermittelten Steuerdaten des Transportdatemstroms festgestellt. wie viele Programmdatenströme in den jeweiligen Transportdatenströmen enthalten sind. Wie eingangs erwähnt, kann die Zahl der Programmdatenströme pro Transpartdatenstrom zwischen fünf und zehn schwanken. Die von den Steuerrechnern 100 bis Y00 jeweils festgestellte Anzahl von Programmdatenströmen wird über den Steuerbus 4 an den zentralen Steuerrechner 2 weitergeleitet. Der zentrale Steuerrechner 2 nimmt dann die Zuweisung der Transportdatenströme zu den einzelnen Programmumsetzern mittels in der Kopfstellenanlage vorhandener Umschalter S11 bis SY1 und U11 bis UYx vor.

Wird beispielsweise angenommen, daß jede Umsetzereinheft 111 bis Y11 über sieben Programmumstezer K11 bis K17, K21 bis K27, ... und KY1 bis KY7, verfügt, so sind für die Programmumsetzer Umschalter U11 bis U16, U21 bis U26, ... und UY1 bis UY6 vorhanden. Weiterhin sei angenommen. daß im Transportdatenstrom der ersten Umsetzereinheit 111 acht Programmdatenströme enthalten sind, wohingegen im Transportdatenstrom der zweiten Umsetzereinheit 211 fünf Programmdatenströme enthalten sind. Durch die Steuerrechner 2, 100, 200 wird der ersten Transportdatenstrom den sieben Programmumsetzem K11 bis K17 der ersten Umsetzereinheit 111 über die Umschalter U11 bis U16 zugewiesen (der jeweils erste Programmumsetzer ist fest mit-dem jeweiligen Transportdatenstrom verbunden), der zweite Transportdatenstrom wird den ersten fünf Programmumsetzem K21 bis K25 der zweiten Umsetzereinheit 211 über die nicht dargestellten Umschalter U21 bis U24 zugewiesen. Der zentrale Steuerrechner 2 bewirkt außerdern, daß die Umschalter S12. S21 und S22 betätigt werden, wodurch der Transportdatenstrom der ersten Umsetzereinheit 111 auf den Transportstrombus 5 geleitet wird und in der zweiten Umsetzereinheit 211 zur Verfügung steht. In der zweiten Umsetzereinheit 211 wird durch den nicht dargestellten Umschalter U25 der erste Transportdatenstrom zusätzlich dem Programmumsetzer K26 zugewiesen. Durch eine entsprechende Ansteuerung der Demultiplexer in den Umsetzereinheiten 111 und 211 werden die in den beiden Transportdatenströmen insgesamt enthaltenen dreizehn Programme in analoge Fernsehsignale umgesetzt.

Neben dem beschriebenen Beispiel ist jede andere Verteilung von Transportdatenströmen zu Programmumsetzem in einzelnen Umsetzereinheiten denkbar und möglich.

Ebenso ist es möglich, daß die Anzahl der Programmumsetzer in den einzelnen Umsetzereinheiten unterschiedlich ist.

Die beschriebene Zuweisung der Transportdatenströme zu den einzelnen Programmumsetzem durch die Umschalter U11 bis UYn und S11 bis SY2 und den Transportstrombus 5 stellt eine mögliche Ausführungsform dar, andere Ausführungsformen ergeben sich ohne weiteres aus der vorliegenden Beschreibung unter Berücksichtigung des der vorliegenden Erfindung zugrunde liegenden Prinzips, daß in einzelnen Umsetzereinheiten nicht genutzte Programmumsetzer für die Umsetzung von Programmdatenströmen aus anderen Umsetzereinheiten genutzt werden.

Werden gebührenpflichtige digitale Programme von der vorliegenden Kopfstellenanlage in analoge Programme umgesetzt, so muß beachtet werden, daß durch die "conditional access"-Einheit 103, 104; 203. 204; ... die vorhandene Verschlüsselung der gebührenpflichtigen digitalen Programme aufgehoben wird. Die analogen Programme können aber mittels bekannter analoger Verschlüsselungsverfahren wieder verschlüsselt werden.

## Patentansprüche

1. Kopfstellenanlage für den Empfang digitaler Rundfunksignale, mit
Umsetzereinheiten (111, ...,Y11) für digitale Transportdatenströme, welche mehrere Programmumsetzer (K11, ..., KY) zur Umsetzung von in den digitalen Transportdatenströmen enthaltenen digitalen Programmdatenströmen in bestimmte Kanäle belegende analoge Fernsehsignale aufweisen sowie
einer Bedieneinheit (1) und einer Steuereinheit (2, 100, 200),
**dadurch gekennzeichnet,**
**daß** eine von der Steuereinheit gesteuerte Umschalteinrichtung (5, U11, ..., SY1) zur Verteilung der Transportdatenströme auf die Programmumsetzer vorhanden ist, und
**daß** die Steuereinheit die Transportdatenströme der einzelnen Umsetzereinheiten mittels der Umschalteinrichtung derart auf die Programmumsetzer in allen. Umsetzereinheiten verteilt, daß für alle Programmdatenströme ein Programmumsetzer zur Verfügung steht, wobei
die Steuereinheit ermittelt, wie viele Programmdatenströme jeder Transportdatenstrom enthält,
die ermittelte Anzahl der Programmdatenströme jedes Transportdatenstroms mit der Anzahl der in der jeweiligen Umsetzereinheit für diesen Transportdatenstrom vorhandenen Programmumsetzer verglichen wird, und
die Steuereinheit im Falle einer größeren Anzahl von Programmdatenströmen den jeweiligen Transportdatenstrom mittels der Umschalteinheit zu der oder den Umsetzereinheiten weiterleitet, bei denen die Anzahl der Programmumsetzer größer ist als die Anzahl der Programmdatenströme des zugehörigen Transpondätenstroms.

2. Kopfstellenanlage nach Anspruch 1,
**dadurch gekennzeichnet,**
**daß** die Umschalteinheit von einem Transportstrombus (5), ersten Umschaltern (S11, ..., SY1) und zweiten Umschaltern (U11, ..., U1x) gebildet wird, wobei mittels der ersten Umschalter die Transportdatenströme über den Transportstrombus von einer Umsetzereinheit zu einer oder mehreren anderen Umsetzereinheiten geleitet werden können, und daß in den jeweiligen Umsetzereinheiten mittels der zweiten Umschalter den Programmumsetzem entweder der Transportdatenstrom der jeweiligen Umsetzereinheit oder der über den Transportstrombus zugeleitete Transportdatenstrom einer anderen Umsetzereinheit zugeführt wird.

## Revendications

1. Installation de tête pour la réception de signaux de radiodiffusion numériques comportant des unités formant convertisseurs (111, ..., Y11) pour des flux numériques de données de transport, qui comportent plusieurs convertisseurs de programmes (K11, ..., KY) pour convertir des flux numériques de données de programmes, contenus dans les flux numériques de données de transport, en des signaux de télévision analogiques occupant certains canaux, ainsi qu'une unité d'actionnement (1) et une unité de commande (2, 100, 200),
**caractérisée en ce**
**qu'**un dispositif de commutation (5, U11, ..., SY1) commandé par l'unité de commande est présent pour la répartition des flux de données de transport entre les convertisseurs de programmes, et
**que** l'unité de commande répartit les flux de données de transport des différentes unités formant convertisseurs à l'aide du dispositif de commutation entre les convertisseurs de programmes dans toutes les unités formant convertisseurs de telle sorte que pour tous les flux de données de programmes, on dispose d'un convertisseur de programme, auquel cas
l'unité de commande détermine combien de flux de données de programmes contient chaque flux de données de transport,
le nombre déterminé des flux de données de programmes de chaque flux de données de transport comparé au nombre des convertisseurs de programmes présents dans l'unité respective formant convertisseur pour ce flux de données de transport, et
dans le cas d'un nombre plus élevé de flux de données de transport, l'unité de commande retransmet respectivement le flux de données de transport à l'aide de l'unité de commutation en direction de la ou des unités formant convertisseurs, dans lesquelles le nombre des convertisseurs de programmes est supérieur au nombre des flux de données de programmes du flux associé de données de transport.

2. Installation de tête selon la revendication 1,
**caractérisée en ce que**
que l'unité de commutation est formée par un bus de flux de transport (5), des premiers commutateurs (S11, ..., SY1) et des seconds commutateurs (U11, ..., U1x), les flux de données de transport pouvant être dirigés au moyen des premiers commutateurs par l'intermédiaire du flux de transport depuis une unité de commutation vers une ou plusieurs autres unités de commutation, et que dans les unités de commutation respectives, soit le flux de données de transport de l'unité respective formant convertisseur, soit le flux de données de transport envoyé par l'intermédiaire du bus de flux de transport est envoyé au convertisseur de programme au moyen du second commutateur à une autre unité formant convertisseur à l'aide du second commutateur.

## Claims

1. Head-end equipment for receiving digital broadcast signals, comprising converter units (111, ..., Y11) for digital transport data streams, which converter units have a plurality of program converters (K11, ..., KY) for converting digital program data streams, contained in the digital transport data streams, into analog television signals occupying certain channels, and said head-end equipment comprising an operating unit (1) and a control unit (2, 100, 200),
**characterized in that**
there is a changeover means (5, U11, ..., SY1), controlled by the control unit, for distributing the transport data streams to the program converters, and the control unit, by means of the changeover means, distributes the transport data streams of the individual converter units to the program converters in all converter units in such a way that there is a program converter available for all program data streams, wherein
the control unit ascertains how many program data streams each transport data stream contains,
the ascertained number of program data streams of each transport data stream is compared with the number of program converters present in the respective converter unit for this transport data stream, and
in the case of a greater number of program data streams, the control unit, by means of the changeover unit, forwards the respective transport data stream to the converter unit or units in which the number of program converters is greater than the number of program data streams of the associated transport data stream.

2. Head-end equipment according to Claim 1,
**characterized in that**
the changeover unit consists of a transport stream bus (5), first changeover switches (S11, ..., SY1) and second changeover switches (U11, ..., U1x), wherein the transport data streams can be routed by means of the first changeover switches, via the transport stream bus, from a converter unit to one or more other converter units, and, in the respective converter units, either the transport data stream of the respective converter unit or the transport data stream, supplied via the transport stream bus, of another converter unit is supplied to the program converters by means of the second changeover switches.
